# EUROPÄISCHE PATENTSCHRIFT

(11) **EP 2 025 612 B1**
(45) Veröffentlichungstag und Bekanntmachung des Hinweises auf die Patenterteilung: **10.06.2009**
(21) Anmeldenummer: 07015954.6
(22) Anmeldetag: 14.08.2007
(51) Int. Cl.: B65D 19/34

(54) **Transportpaletten-Stecksystem mit Palettenfuss aus papierhaltiger Masse**
Assembling system for transport pallet with pallet feet made of a material containing paper
Système d'assemblage pour palette de transport avec pied de palette en pâte à papier

(43) Veröffentlichungstag der Anmeldung: 18.02.2009
(73) Patentinhaber: Easypal AG, 8808 Pfäffikon SZ (CH)
(72) Erfinder: Bruhn, Hans-Peter, 8006-701 St. Barbara / Faro (PT)
(74) Vertreter: Raffay & Fleck

(56) Entgegenhaltungen:
- DE-A1- 3 632 062
- DE-A1- 19 935 800
- DE-U- 7 211 803
- DE-U1- 8 513 124
- DE-U1- 20 106 372
- FR-A- 2 301 441

## Beschreibung

Die Erfindung betrifft ein Transportpaletten-Stecksystem nach dem Oberbegriff des Anspruches 1, und einen Palettenfuß nach dem Oberbegriff des Anspruches 6.

Eine derartige Transportpalette ist aus der DE 201 06 372 U1 bekannt. Darüber hinaus sind im Stand der Technik verschiedene Ansätze bekannt, Standardpaletten aus Holz durch Paletten aus Kartonmaterial zu ersetzen. Paletten aus Kartonmaterial haben den Vorteil, dass sie vom Empfänger der Ware dem Papierrecyclingkreislauf zugeführt werden können. Aber auch aus Gewichtsgründen finden solche Paletten mehr und mehr Verwendung, da sie leichter sind als Paletten aus Holz und insofern geringere Transportkosten verursachen.

Aus der DE 201 03 902 U1 ist eine aus Karton oder Wellpappe bestehende Palette bekannt, welche Füße aufweist, die aus mehreren, parallel und mit Abstand zueinander verlaufenden und gemeinsam mit dem Oberdeck einstückig ausgebildeten Kufen bestehen. In der gefalteten Anordnung haben die Kufen einen dreieckigen oder viereckigen Querschnitt.

Aus der DE 195 23 492 A1 ist eine Palette bekannt, die Rollenkerne von Papier-, Teppich- und ähnlichen Materialrollen als Tragelemente verwendet, wobei die Rollenkerne zweilagig übereinander und senkrecht zueinander angeordnet sind.

Die EP 0 693 430 B1, die EP 0544 659 B1 und die EP 0 611 354 zeigen Kartonpaletten, die Grundelemente mit einem dicht gepackten festen Kern aus Wellpappe aufweisen, sowie eine Deckplatte aus Wellpappe, die auf den Grundelementen befestigt ist.

Aus der WO 95/25672 ist ein Paletten-System bekannt, welches aus einem flachen Oberdeck besteht, das mit röhrenförmigen Kufen versehen wird. Die Kufen sind aus einem flachen Karton gefaltet. Zur Verstärkung der Kufen, werden separate quaderförmige Verstärkungselemente in die Kufen eingebracht, die beispielsweise aus aufgewickeltem oder bienenwabenförmigem Kartonmaterial bestehen.

Schließlich ist aus der EP 1 588 952 B2 eine Palette mit Füßen aus eckigem Pappkartonrohr, in dem durch Versteifungen Kammern ausgebildet werden, und Querverstrebungen unter der Deckplatte bekannt.

Des Weiteren ist aus der WO 2006/002920 A2 eine Palette aus gekreuzten Halbrohren mit Rohren als Verstärkungen bekannt.

Die Wellpapp-Kartonpaletten des Standes der Technik können in Bezug auf Transportabilität, Platz sparender Lagerung, Festigkeit, Stabilität, Einfachheit der Herstellung und Materialverbrauch besonders in Kombination nicht allen Anforderungen gerecht werden. Weiterhin sind die bekannten Wellpapp-Kartonpaletten wegen der Kapillarwirkung des Kartonmaterials anfällig für Wasser und Feuchtigkeit.

Auf der anderen Seite fallen große Menge an Verpackungen als Müll an, die aus einem Verbund unter anderem bestehend aus Papier und thermoplastische Materialien aufgebaut sind. Solche Verpackungen müssen meist auf Grund ihrer Zusammensetzung aufwendig recycelt/entsorgt werden.

Desweiteren sind aus der DE 199 35 800 A1 Transportpalleten und Palettenfüße bekannt, die Papier, Stärke und Restwasser enthalten können, allerdings in der Herstellung aufgrund Vakuum-, Hochdruck- und Mikrowellen-Trocknungseinsatzes aufwendig sind und bei Beschichtungen zu hohen Gewichten führen.

Es besteht daher der Bedarf für eine Transportpalette beziehungsweise Platte, die auf engstem Raum lagerbar, leichter transportierbar, leichter herstellbar ist, eine höhere Stabilität aufweist, weniger oder kostengünstigeres Material, gegebenenfalls solches Abfallmaterial, dass sonst aufwendig entsorgt/recycelt werden müsste, verwendet und gegen Feuchtigkeit besser geschützt ist.

Die oben genannten Probleme und Anforderungen werde gelöst durch einen Transportpaletten-Stecksystem gemäß Patentanspruch 1, sowie durch einen Palettenfuß gemäß Patentanspruch 6. Die Nebenansprüche 2 bis 5 geben vorteilhafte Weiterbildungen an.

Gemäß Anspruch 1 beinhaltet ein erfindungsgemäßes Transportpaletten-Stecksystem, eine Platte mit Ober- und Unterseite und mindestens vier Palettenfüßen. Die Palettenfüße bestehen aus einer Masse, die folgende Bestandteile beinhaltet:
a) Papier 70 bis 85 Gew.%,
b) Stärke oder stärkehaltige Biopolymer 5 bis 10 Gew.%,
c) Restwasser und
d) thermoplastische Materialien, insbesondere PE, PP und/oder OPP, jedoch weniger als 5 Gew.%.

Des Weiteren weisen erfindungsgemäß die Palettenfüße auf ihrer zur Platte gerichteten Oberseite je mindestens zwei, insbesondere 3 bis 6, zur Oberseite senkrechte (Sack-)Löcher auf. Ebenfalls weist die Platte auf Ihrer Unterseite korrespondierende (Sack-)Löcher auf. Das Transportpaletten-Stecksystem beinhaltet demnach des weiteren Rohre oder Stäbe, die in den Löchern der Palettenfüße so einsteckbar sind, dass ihre überstehenden Enden von den (Sack-)Löchern in der Unterseite der Platte zumindest teilweise oder ganz aufgenommen werden können.

Somit besteht das einfachste erfindungsgemäße Transportpaletten-Stecksystem aus vier Palettenfüßen mit je zwei Löchern, acht Rohren oder Stäben und einer Platte. Durch einfaches zusammenstecken kann daraus eine Transportpalette gebaut werden. Zum besseren Zusammenhalt der Teile können Kleber oder andere Befestigungsmittel eingesetzt werden.

Das auseinander- oder noch nicht zusammengebaute System kann sehr platzsparend gelagert werden. Der Zusammenbau ist einfach und schnell von nur einer Person oder maschinell zu bewerkstelligen.

Die Produktion der einzelnen Teile ist sehr einfach. Die Tragfähigkeit ist enorm und kann durch zusätzliche konstruktive Maßnahmen, beispielsweise der zumindest teilweisen Integration von Rohren in die Platte weiter gesteigert werden.

Für die Masse, aus denen die Platte besteht, können wieder verwertbare Verpackungsabfälle (wie beispielsweise Stanzabfälle) oder gebrauchte Verpackungen (beispielsweise Tetrapacks oder ähnliches) verwendet werden. Das Papiermaterial wird zerfasert und unter Zugabe von Stärke (6-8 Gew.%) und Wasser vorbereitet. Durch die Zugabe des Wassers wird das Volumen der Papiermasse reguliert. Die zu komprimierende Grundmasse wird in Form von Pellets, Granulat oder ähnlichem hergestellt. Mittels eines Extruders wird die Grundmasse bei beispielsweise 160°C bis 180°C zum papierhaltigen Basismaterial. Das aus dem Extruder austretende Basismaterial kann durch entsprechend auswechselbare Formen beispielsweise bahn-, stab- oder quaderförmig geformt werden. Beim Extrudieren verdampft ein erheblicher Teil des Wassers, so dass nach dem Extrudiervorgang nur noch ein sehr viel geringerer Restwasseranteil, von meist weniger als 2 Gew.% in der Masse vorhanden ist.

Bei der Wahl der Zusammensetzung ist es vorteilhaft, den thermoplastischen Materialanteil so zu wählen, dass er den gesetzlichen Bestimmungen derart genügt, dass die Transportpalette (nach Gebrauch) nicht aufwendig entsorgt werden muss. In der Regel wird der thermoplastische Materialanteil daher im Bereich von 2 bis 4,9 Gew.% liegen. Es besteht die Möglichkeit Verbundverpackungen mit Kunststoffanteil in geringen Mengen mit zu verarbeiten. Dieses Material müsste sonst auf den gegebenen Entsorgungswegen hochpreisig vernichtet werden.

Die beispielsweise bahn-, stab- oder quaderförmig Masse kann in kleine Quader oder Stäbe geschnitten werden, in denen im Anschlüss die (Sack-)Löcher eingebracht werden. Denkbar ist aber auch die, Palettenfüße direkt mit (Sack-)Löchern aus der extrudierten Masse zu formen.

Ein solcher Palettenfuß ist gegenüber vorbekannten Palettenfüßen aus Papier oder Karton besonders stabil, steif und resistent gegen Feuchtigkeit und anderen Einflüssen.

Je nach Anwendung können (Sack-)Löcher oder durchgehende Löcher in Palettenfüßen und Platte gewählt werden. Durchgehende Löcher können das Auseinanderbauen erleichtern, (Sack-)Löcher erhöhen die Stabilität, beugen Verschmutzung vor und sind optisch vorteilhafter und bieten glattere Ober/Standflächen.

Als Platte kann jede beliebige Platte aus jedem beliebigen Material eingesetzt werden. Auch für die Rohre oder Stäbe können zahlreiche Materialien gewählt werden.

Die Rohre oder Stäbe können eckige, ovale, runde oder sonstige Querschnitte aufweisen. Es ist offensichtlich, dass somit auch die (Sack-)Löcher in der Platte und in den Palettenfüßen unterschiedliche Querschnitte aufweisen können.

Vorteilhaft wird die Länge der Rohre oder Stäbe so gewählt, dass zwischen den Bauteilen nach dem Zusammenbau kein Luftspalt verbleibt und auch die (Sack-)Löcher weitestgehend ausgefüllt sind.

Besonders vorteilhaft ist es, gemäß Anspruch 2, die Rohre aus Karton-, Papier- und/oder Recyclingpapierlagen gegebenenfalls unter Zugabe von Klebstoffen zu wickeln. Dadurch kann die Platte als ganzes einfach recycelt werden. Auch werden Gewicht und Produktionsaufwand dadurch reduziert.

Besonders stabil sind erfindungsgemäße Transportpaletten-Stecksysteme wenn sie zusätzlich mindestens zwei Untertraversen beinhalten, die mit Löchern ausgestattet sind, die mit den in den Palettenfüßen und der Unterseite der Platte vorgesehenen (Sack-)Löchern korrespondieren. Dabei weisen die Untertraversen eine solche Dicke auf, dass die Rohre oder Stäbe nach Einstecken durch die Löcher in den Untertraversen und in die (Sack-)Löcher der Palettenfüße noch soweit aus den Untertraversen herausstehen, dass diese herausstehenden Teile der Rohre oder Stäbe in den (Sack-)Löchern der Unterseite der Platte aufgenommen werden können. Nach dem Zusammenbau liegt dann die Platte auf den Untertraversen auf und die Üntertraversen auf den Palettenfüßen. So ist eine optimale Kraftübertragung gewährleistet. In der Regel werden die Untertraversen so ausgebildet, dass sie nach dem Zusammenbau parallel verlaufen und mindestens an ihren beiden Enden auf Palettenfüßen aufliegen. Dementsprechend verlaufen zwei der mindestens zwei Untertraversen in der Regel an zwei Kanten der Platte. Weitere Üntertraversen können angeordnet werden.

Optimalerweise sind gemäß Anspruch 3 auch die Platte und/oder Untertraversen aus einem einer Masse gebildet, die folgende Bestandteile beinhaltet:
a) Papier 70 bis 85 Gew.%,
b) Stärke oder stärkehaltige Biopolymere 5 bis 10 Gew.%,
c) Restwasser und
d) thermoplastische Materialien, insbesondere PE, PP und/oder OPP, jedoch weniger als 5 Gew.%.

Transportpaletten-Stecksysteme, die so ausgebildet sind, sind besonders leicht, transportabel und stabil, tragfähig, leicht herzustellen und recycelbar. Sie sind darüber hinaus besonders unempfindlich gegenüber Umwelteinflüssen und auf engstem Raum lagerbar, da die Materialstärke auf Grund der Festigkeit sehr gering gewählt werden kann.

Gegenüber herkömmlichen Paletten ist es besonders Vorteilhaft, dass die Einzelteile des Transportpaletten-Stecksystems sehr platzsparend transportiert und auch unter minimalem Aufwand beim Verwender assembliert werden können.

Besonders vorteilhaft ist es, gemäß Anspruch 4, die Rohre oder Stäbe aus Karton-, Papier- und/oder Recyclingpapierlagen gegebenenfalls unter Zugabe von Klebstoffen zu wickeln.

Dadurch sind die Transportpaletten-Stecksysteme besonders leicht herzustellen und recycelbar.

Vorteilhafterweise werden die Rohre oder Stäbe gemäß Anspruch 5 an mindestens einem ihrer Enden konisch geformt und die (Sack-)Löcher der Palettenfüße und/oder der Unterseite der Palette so ausgebildet, dass sie minimal kleinere Querschnittsmaße aufweisen als die Rohre oder Stäbe.

Dadurch wird es möglich, einen sehr festen Zusammenhalt der Bauteile nach dem Zusammenbau zu erzielen, ohne Klebemittel oder ähnliches einzusetzen. Dadurch können die Transportpaletten-Stecksysteme besonders leicht montiert und auch demontiert werden. Der Klemmeffekt ist besonders gut, wenn Rohre und keine Stäbe eingesetzt werden, da Rohre sich besser verformen lassen.

Die Aufgabe wird aber auch gelöst durch einen Palettenfuß nach Anspruch 6, der aus einer Masse besteht, die folgende Bestandteile beinhaltet:
a) Papier 70 bis 85 Gew.%,
b) Stärke oder stärkehaltige Biopolymere 5 bis 10 Gew.%,
c) Restwasser und
d) thermoplastische Materialien, insbesondere PE, PP und/oder OPP, jedoch weniger als 5 Gew.%,
und der Palettenfuß auf einer Seite mindestens zwei, insbesondere 3 bis 6, zur Oberseite senkrechte (Sack-)Löcher aufweist.

Solche Palettenfüße können beispielsweise bei vorbekannten Transportpaletten und Deckplatten als Ersatz für die dort verwendete Palettenfüße eingesetzt werden, indem an den vorbekannten Bauteilen Auswölbungen oder ähnliches angebracht werden, die in die (Sack-)Löcher eingreifen und so zu einer deutlichen Erhöhung der Stabilität und Beständigkeit, einer Reduzierung des Herstellungsaufwandes und zur Vermeidung der Entsorgung von Verbundverpackungsmaterialien führen.

Weitere Vorteile und Merkmale der Erfindung ergeben sich aus der nachfolgenden Beschreibung eines Ausführungsbeispieles anhand der beigefügten Figuren. Dabei zeigen:
- Fig. 1: zusammengebautes erfindungsgemäßes Transportpaletten-Stecksystem mit Platte, Untertraversen und Palettenfüße inclusive Rohrteilen(verborgene Kanten gestrichelt);
- Fig. 2: Palettenfuß mit eingesteckten Rohren;
- Fig. 3: Palettenfuß mit eingesteckten Rohren und Untertraverse;

Die Figuren stellen rein schematische Darstellungen eines Ausführungsbeispiels dar und sind insbesondere nicht maßstabsgerecht. Die Figuren sind ferner nicht beschränkend.

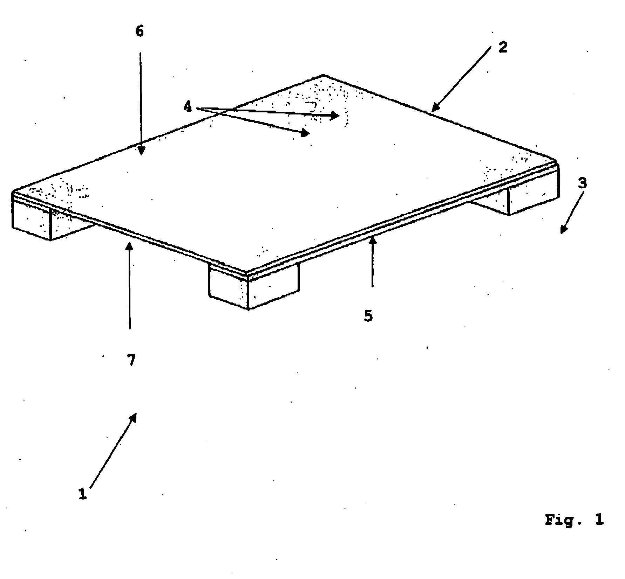

In Fig. 1 ist der Aufbau eines erfindungsgemäßen Transportpaletten-Stecksystems von der Seite gezeigt. Zu sehen sind gestrichelt auch verborgene Kanten. Auf den vier Palettenfüßen 3, ruhen die jeweils zwei der Palettenfüße 3 verbindenden Untertraversen 5. Auf diesen Untertraversen 5 ruht die Platte 2. Zusammengehalten werden die Teile durch eingeführte Rohre 4.

Die auf der Platte durch die Nutzlast aufgebracht Kraft wird über die Platte 2 auf die Untertraversen 5 übertragen. Die Palettenfüße 3 übertragen die Kraft auf den Boden.

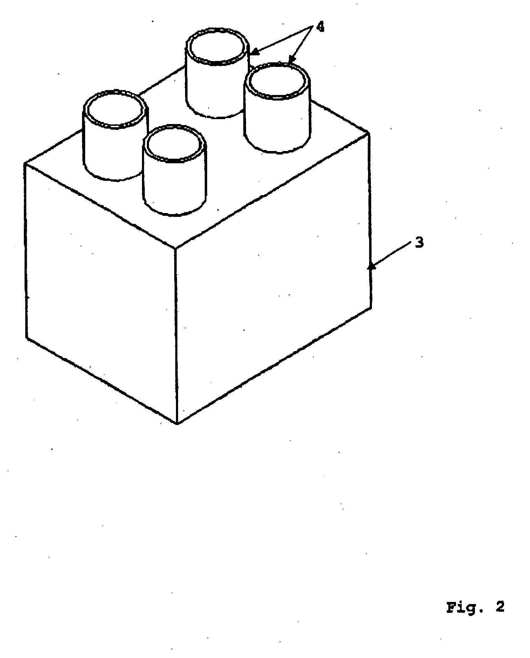

In Fig. 2 ist ein Palettenfuß 3 zu erkennen. In die in ihm vorgesehenen (Sack-)Löcher sind Rohre 4 eingebracht, die nach oben heraus stehen. Darauf kann nun direkt eine mit (Sack-)Löchern versehende Platte 2 oder zunächst eine Untertraverse 5 aufgebracht werden.

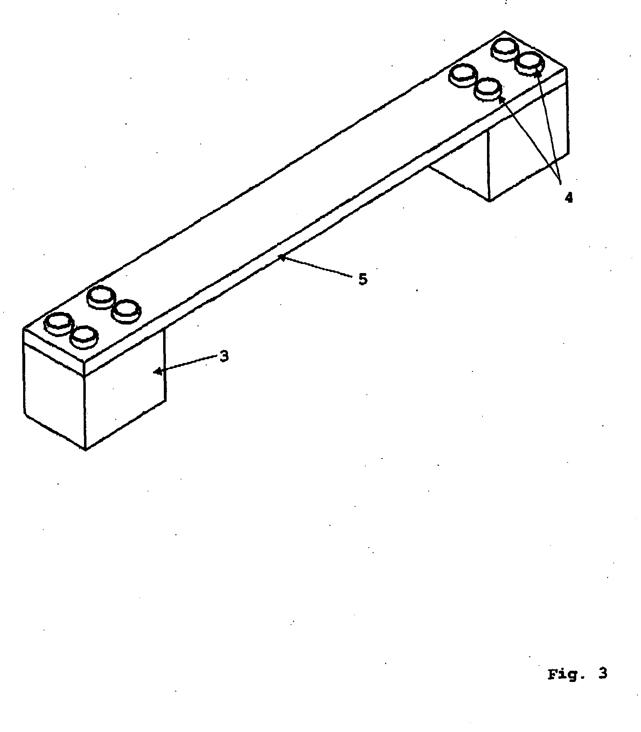

In Fig. 3 sind zwei Palettenfüße 3 mit einer Untertraverse 5 und entsprechenden Rohren 4 zusammengebaut dargestellt. Hier ist wieder zu erkennen, dass die Rohre 4 aus Palettenfüßen 3 und Untertraverse 5 nach oben heraus überstehen. Dieser überstehende Teil der Rohre 4 wird von den (Sack-)Löchern in der Platte 2 aufgenommen.

### Bezugszeichenliste

- 1: Transportpalette
- 2: Platte
- 3: Palettenfuß
- 4: Rohr
- 5: Untertraverse
- 6: Platten-Oberseite
- 7: Platten-Unterseite

## Patentansprüche

1. Transportpaletten-Stecksystem (1), aufweisend ein Lastbett mit Ober- (6) und Unterseite (7) und mindestens vier Palettenfüßen (3), wobei die Palettenfüße (3) auf ihrer zum Lastbett gerichteten Oberseite je mindestens zwei, insbesondere 3 bis 6, zur Oberseite senkrechte (Sack-)Löcher aufweisen, das Lastbett auf seiner Unterseite ebenfalls korrespondierende (Sack-)Löcher aufweist, und dass das Transportpaletten-Stecksystem Rohre oder Stäbe (4) beinhaltet, die in den Löchern der Palettenfüße so einsteckbar sind, dass ihre überstehenden Enden von den (Sack-)Löchern in der Unterseite (7) des Lastbettes zumindest teilweise oder ganz aufgenommen werden können, **dadurch gekennzeichnet,**
**dass** das Lastbett in Form einer Platte (2) gestaltet ist, und dass die Palettenfüße (3) aus einer Masse bestehen, die folgende Bestandteile beinhaltet:
a) Papier 70 bis 85 Gew.%,
b) Stärke oder stärkehaltige Biopolymere 5 bis 10 Gew.%,
c) Restwasser
d) thermoplastische Materialien, insbesondere PE, PP und/oder OPP, jedoch weniger als 5 Gew.%.

2. Transportpaletten-Stecksystem (1) nach Anspruch 1, **dadurch gekennzeichnet, dass** es mindestens zwei Untertraversen (5) mit zu den in den Palettenfüßen (3) und der Unterseite der Platte (2) vorgesehenen (Sack-)Löchern korrespondierende Löcher aufweist, und dass die Untertraversen (5) eine solche Dicke aufweisen, dass die Rohre oder Stäbe (4) nach Einstecken durch die Löcher in den Untertraversen (5) und in die (Sack-)Löcher der Palettenfüße (3) noch soweit aus den Untertraversen herausstehen, dass diese herausstehenden Teile der Rohre oder Stäbe (4) in den (Sack-)Löchern der Unterseite der Platte (2) aufgenommen werden können.

3. Transportpaletten-Stecksystem (1) nach einem der vorhergehenden Ansprüche, **dadurch gekennzeichnet, dass** die Platte (2) und/oder die Untertraversen (5) aus einer Masse bestehen, die folgende Bestandteile beinhaltet:
a) Papier 70 bis 85 Gew.%,
b) Stärke oder stärkehaltige Biopolymere 5 bis 10 Gew.%,
c) Restwasser und
d) thermoplastische Materialien, insbensondere PE, PP und/oder OPP, jedoch weniger als 5 Gew.%,

4. Transportpaletten-Stecksystem (1) nach einem der vorhergehenden Ansprüche, **dadurch gekennzeichnet, dass** die Rohre oder Stäbe (4) aus Karton-, Papier- und/oder Recyclingpapierlagen gegebenenfalls unter Zugabe von Klebstoffen gewickelt sind.

5. Transportpaletten-Stecksystem (1) nach einem der vorhergehenden Ansprüche, **dadurch gekennzeichnet, dass** die Rohre oder Stäbe (4) an mindestens einem ihrer Enden konisch geformt sind und die (Sack-)Löcher in den Palettenfüßen und/oder der Unterseite der Palette (2) minimal kleinere Querschnittsmaße aufweisen als die Rohre oder Stäbe (4).

6. Palettenfuß (3), der auf einer Seite mindestens zwei, insbesondere 3 bis 6, zur Oberseite senkrechte (Sack-)Löcher aufweist, **dadurch gekennzeichnet, dass** er aus einer Masse besteht, die folgende Bestandteile beinhaltet:
a) Papier 70 bis 85 Gew.%,
b) Stärke oder stärkehaltige Biopolymere 5 bis 10 Gew.%,
c) Restwasser und
d) thermoplastische Materialien, insbesondere PE, PP und/oder OPP, jedoch weniger als 5 Gew.%.

## Claims

1. A rack system fitted with transport pallets (1), exhibiting a load bed with upper side (6) and lower side (7) and at least four pallet feet (3), wherein the pallet feet (3) on their upper side directed towards the load bed each include at least two, in particular 3 to 6, blind holes perpendicular to the upper side, the load bed also includes corresponding blind holes on its lower side, and the rack system fitted with transport pallets contains pipes or rods (4), which can be inserted into the holes of the pallet feet so that their protruding ends from the blind holes can be housed at least partially or completely in the lower side (7) of the load bed,
**characterised in that**
the load bed is in the form of a plate (2), and the pallet feet (3) are composed of a mass, which contains the following components:
a) paper 70 to 85 % in weight,
b) starch or starch containing biopolymers 5 to 10 % in weight,
c) residual water
d) thermoplastic materials, in particular PE, PP and/or OPP, however less than 5 % in weight.

2. A rack system with transport pallets (1) according to claim 1, **characterised in that** it includes at least two lower crossheads (5) with holes corresponding to the blind holes provided in the pallet feet (3) and the lower side of the plate (2), and the lower crossheads (5) have such a thickness that the pipes or rods (4) once inserted into the holes in the lower crossheads ( 5) and into the blind holes of the pallet feet (3) still protrude from the lower crossheads so that these protruding parts of the pipes or rods (4) can be housed in the blind holes of the lower side of the plate (2).

3. A rack system fitted with transport pallets (1) according to any of the preceding claims, **characterised in that** the plate (2) and/or the lower crossheads (5) are composed of a mass, which contains the following components:
a) paper 70 to 85 % in weight,
b) starch or starch containing biopolymers 5 to 10 % in weight,
c) residual water and
d) thermoplastic materials, in particular PE, PP and/or OPP, however less than 5 % in weight,

4. A rack system fitted with transport pallets (1) according to any of the preceding claims, **characterised in that** the pipes or rods (4) are rolled with layers of cardboard, paper and/or recycling paper possibly with the addition of glues.

5. A rack system fitted with transport pallets (1) according to any of the preceding claims, **characterised in that** the pipes or rods (4) are conical in shape at least at one of their ends and the blind holes in the pallet feet and/or the lower side of the pallet (2) have minimal smaller cross-sections than the pipes or rods (4).

6. A pallet foot (3), including on one side at least two, in particular 3 to 6, blind holes perpendicular to the upper side, **characterised in that** it is composed of a mass which contains the following components:
a) paper 70 to 85 % in weight,
b) starch or starch containing biopolymers 5 to 10 % in weight,
c) residual water and
d) thermoplastic materials, in particular PE, PP and/or OPP, however less than 5 % in weight.

## Revendications

1. Système enfichable avec palettes de transport (1), présentant un plateau de chargement avec côté supérieur (6) et côté inférieur (7) et au moins quatre pieds de palette (3), dans lequel les pieds de palette (3) présentent chacun sur leur côté supérieur dirigé vers le plateau de chargement au moins deux, en particulier 3 à 6, trous aveugles perpendiculaires au côté supérieur, le plateau de chargement présente également des trous aveugles correspondants sur son côté inférieur, et le palettes de transport contient des tubes ou tiges (4), qui sont enfichables dans les trous des pieds de palette de telle sorte que leurs extrémités saillantes des trous aveugles peuvent être reçues au moins partiellement ou complètement dans le côté inférieur (7) du plateau de chargement, **caractérisé en ce**
**que** le plateau de chargement est sous forme de plaque (2), et que les pieds de palette (3) se composent d'une masse comprenant les composantes suivantes :
a) papier 70 à 85 % en poids,
b) amidon ou biopolymères contenant de l'amidon 5 à 10 % en poids,
c) eau résiduelle
d) matériaux thermoplastiques, en particulier PE, PP et/ou OPP, cependant moins de 5 % en poids.

2. Système enfichable avec palettes de transport (1) selon la revendication 1, **caractérisé en ce qu'**il présente au moins deux traverses inférieures avec des trous correspondants aux trous aveugles prévus dans les pieds de palette (3) et le côté inférieur de la plaque (2), et que les traverses inférieures (5) sont d'une une telle épaisseur que les tubes ou tiges (4) après introduction dans les trous dans les traverses inférieures (5) et les trous aveugles des pieds de palette (3) dépassent encore des traverses inférieures au point que les parties saillantes des tubes ou tiges (4) peuvent être reçues dans les trous aveugles du côté inférieur de la plaque (2).

3. Système enfichable avec palettes de transport (1) selon l'une quelconque des revendications précédentes, **caractérisé en ce que** la plaque (2) et/ou les traverses inférieures (5) sont constituées d'une masse contenant les composantes suivantes :
a) papier 70 à 85 % en poids,
b) amidon ou biopolymères contenant de l'amidon 5 à 10 % en poids,
c) eau résiduelle et
d) matériaux thermoplastiques, en particulier PE, PP et/ou OPP, cependant moins de 5 % en poids.

4. Système enfichable avec palettes de transport (1) selon l'une quelconque des revendications précédentes, **caractérisé en ce que** les tubes ou tiges (4) sont laminés en couches de carton, de papier et/ou de papier de recyclage le cas échéant avec addition de colles.

5. Système enfichable avec palettes de transport (1) selon l'une quelconque des revendications précédentes, **caractérisé en ce que** les tubes ou tiges (4) sont de forme conique au moins en l'une de leurs extrémités et que les trous aveugles présentent dans les pieds de palette et/ou le côté inférieur de la palette (2) des sections transversales minimales plus petites que les tubes ou tiges (4).

6. Pied de palette (3), présentant sur un côté au moins deux, en particulier 3 à 6, trous aveugles perpendiculaires au côté supérieur, **caractérisé en ce qu'**il est constitué d'une masse comprenant les composantes suivantes :
a) papier 70 à 85 % en poids,
b) amidon ou biopolymères contenant de l'amidon 5 à 10 % en poids,
c) eau résiduelle et
d) matériaux thermoplastiques, en particulier PE, PP et/ou OPP, cependant moins de 5 % en poids,
